Europäisches Patentamt

European Patent Office

Office européen des brevets

(19)

(11) EP 0 942 602 A2

(12) EUROPEAN PATENT APPLICATION

(43) Date of publication:
15.09.1999 Bulletin 1999/37

(51) Int Cl.⁶: H04N 7/24

(21) Application number: 99200314.5

(22) Date of filing: 03.02.1999

(84) Designated Contracting States:
AT BE CH CY DE DK ES FI FR GB GR IE IT LI LU
MC NL PT SE
Designated Extension States:
AL LT LV MK RO SI

(30) Priority: 10.03.1998 GB 9805035

(71) Applicant: NDS LIMITED
West Drayton, Middlesex UB7 0DQ (GB)

(72) Inventor: Bock, Alois Martin
Eastleigh, Hampshire SO53 4RH (GB)

(74) Representative: Stoakes, Rosemarie Clare
NDS Limited,
Gamma House,
Enterprise Road
Chilworth, Hampshire SO16 7NS (GB)

(54) **Method and apparatus for estimating the difference in picture quality between a distorted and an undistorted video signal**

(57) The invention relates to estimating the difference in picture quality between two versions of a video signal, one of which has been subject to distortion and the other of which has not been subject to the distortion. The invention has application to estimating the picture quality of a signal subjected to digital compression in comparison to the picture quality of the signal before compression.

The estimate of picture quality is obtained by first deriving a difference signal representing the difference between the distorted and undistorted versions of the video signal. A masking signal is obtained by filtering the undistorted version of the video signal and is used to mask the difference signal thereby to derive an output measure of the said difference in picture quality. The masking signal is obtained by filtering the undistorted version of the video signal through a channel including a high-pass edge detection filter.

Preferably, a second measure of the difference in picture quality is obtained by applying both the distorted and undistorted versions of the video signal to a circuit that detects block distortion across block boundaries. The output from the block distortion circuit is also masked by the masking signal.

Fig.2.

## Description

The present invention relates to estimating the difference in picture quality between two versions of a video signal and in particular to estimating the difference in picture quality between a version of the video signal subject to distortion and a version without the distortion.

The compression of a digital video signal introduces distortion in the form of compression artefacts, which impair the picture quality of the compressed signal. An estimate of the picture quality is needed in order to control the parameters of the compression and consequently the picture quality of the compressed signal. The parameters to be controlled include the allocation of encoding bits to the most critical areas of the picture image or the bit-rate demand of individual encoders in an application where a group of encoders supply signals to a statistical multiplexer.

Models to define the subjective picture quality of video signals have already been proposed. Probably the most detailed and complex of these is known as the Sarnoff model, which requires a considerable amount of processing power. The Sarnoff model aims to measure picture degradation regardless of the origin of the degradation and tries to put characteristics such as picture softness, for example, on an equal footing with picture coding artefacts. The Sarnoff model was proposed much earlier than modern image compression algorithms and so is not particularly sensitive to the identification of compression artefacts.

A simple approach to estimating image quality in a quantised video signal is to use the quantisation factor itself. The quantisation factor does not however provide information on image distortion within a picture. Furthermore, different pictures suffer in different ways from coarse quantisation. A more detailed picture may appear to a viewer to be less distorted because of coarse quantisation than a less detailed picture.

A second approach to estimating image quality of a video signal is to use a measure of the signal-to-noise ratio of the video signal. However it is known that the signal-to-noise ratio alone does not provide a satisfactory measure of picture quality.

A need therefore exists for a reliable approach to estimating the difference in picture quality between a first version of a video signal subject to distortion and a second version of the signal without the distortion where the estimate can be provided in real time and without undue complexity

According to the present invention there is now provided a method of estimating the difference in picture quality between a first version of a video signal which has been subject to distortion and a second version of the video signal without the distortion, the method comprising the steps of: deriving a difference signal representing the difference between the distorted and undistorted versions of the video signal; generating a masking signal by filtering the undistorted version of the video signal through a high-pass edge detection filter; and masking the difference signal by means of the masking signal to derive an output measure of the said difference in picture quality.

Further according to the present invention there is provided apparatus for estimating the difference in picture quality between a first version of a video signal which has been subject to distortion and a second version of the video signal without the distortion, the apparatus comprising: a difference circuit to generate a difference signal representing the difference between the distorted and undistorted versions of the video signal; a filter circuit comprising a high-pass edge detection filter to receive the undistorted version of the video signal and to generate a masking signal therefrom; and a masking circuit to mask the difference signal by means of the masking signal to derive an output measure of the said difference in picture quality.

An advantage of the invention is that the high-pass edge detection filter is an effective and reliable means to derive a masking signal to select an output measure of visible distortion from a compressed video signal.

The invention will now be described by way of example with reference to the accompanying drawings in which:

Figure 1 shows a video signal compression and decompression apparatus to supply a first version of a video signal subject to distortion and a second version of the video signal without the distortion;

Figure 2 shows the apparatus of Figure 1 in further detail;

Figure 3 shows apparatus according to the invention to estimate the difference in picture quality between the first and second versions of the video signal supplied by the apparatus of Figures 1 and 2;

Figure 4 shows a table of filter coefficients used in an edge detection filter included in the apparatus of Figure 3; and

Figure 5 shows a table of filter coefficients used in a spatial filter included in the apparatus of Figure 3.

Figure 6 is a diagram showing the arrangement of a picture frame

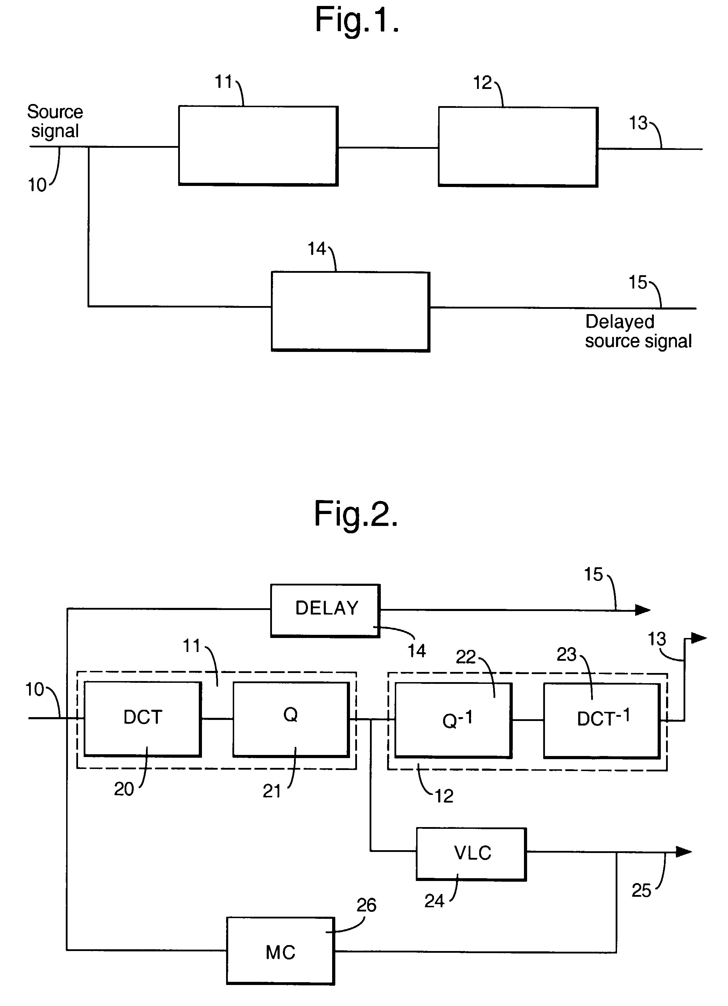

In Figure 1, an input or source digital television signal is applied to an input terminal 10 connected to a compression encoder 11. The compression encoder 11 has a compressed digital signal output connected to a decoder 12. The decoder 12 supplies a decompressed signal output 13, which is a reconstruction of the input television signal.

The television signal at the input terminal 10 is also supplied to a delay circuit 14. The delay circuit delays the digital television signal for a time equal to the delay experienced in the encoder 11 and the decoder 12 in compressing and decompressing the input digital signal at the terminal 10. The delay circuit 14 supplies the delayed television signal to a terminal 15. The signal supplied from the output 13 represents a first distorted version of the input signal which has been distorted as a result of compression within the compression encoder 11 and decompression in the decoder 12. The signal supplied from the output 15 represents an undistorted version of the input signal which is delayed by an interval equal to the time required to pass the input signal through the compression encoder 11 and the decoder 12.

In Figure 2 the input or source digital television signal is again shown applied to the input terminal 10. The delay circuit 14 is connected to the input terminal 10 to supply a delayed and undistorted version of the input signal to the terminal 15. The compression encoder 11 is shown to include a discrete cosine transform encoder 20 and a quantisation circuit 21. The decoder 12 is shown to include an inverse quantisation circuit 22 and an inverse discrete cosine transform decoder 23. The decoder 23 is connected to supply the output terminal 13 with the version of the input signal which has been distorted by way of signal processing in the compression encoder 11 and the decoder 12.

The compression encoder 11 is connected to supply the compressed digital television signal to a variable length encoder 24 from which the compressed signal is supplied to an output terminal 25. Motion compensation is applied to the compressed output signal at the terminal 25 by means of a motion compensation circuit 26.

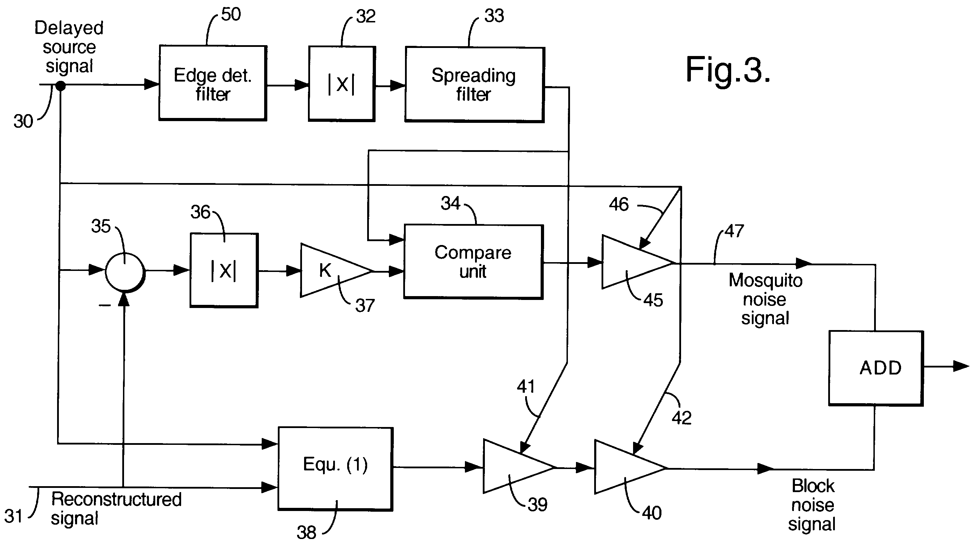

In Figure 3, an input terminal 30 receives a source signal. The source signal is the delayed signal from terminal 15 in Figure 1 and Figure 2. Another input terminal 31 receives a reconstructed signal. The reconstructed signal is the distorted version of the digital television signal from terminal 13 in Figure 1 and Figure 2. The input terminal 30 is connected to a first processing path, which includes an edge detection filter 50, an arithmetic unit 32 and a spreading filter 33. The spreading filter 33 has an output that is connected as a first input to a compare unit 34.

The input terminal 30 is connected to a second processing path, which includes a summing circuit 35, an arithmetic unit 36, an amplifier 37 and a second input to the compare unit 34. The compare unit 34 is connected to a variable attenuator 45 having a control input 46 connected to the input terminal 30. The variable attenuator 45 has an output terminal 47.

The input terminal 30 is connected to a third processing path, which includes a blocking distortion circuit 38, a variable attenuator 39 and a variable attenuator 40. The variable attenuator 39 has a control input 41 connected to the output from the filter 33. The variable attenuator 40 has a control input 42 connected to the input terminal 30. The reconstructed signal at the input terminal 31 is supplied to the blocking distortion circuit 38 and to the summing circuit 35.

The most noticeable and disturbing impairment of picture quality, resulting from compression artefacts in the reconstructed signal 31, comes in two distinct forms. Firstly, there is the so-called "mosquito effect" in which high frequency noise spreads from the picture edges into neighbouring plain areas. Secondly, there is the distortion caused by blocking artefacts where distortion occurs across block boundaries. Both types of impairment may be hidden or masked in the presence of a high frequency, high amplitude source signal. An estimate of the difference in picture quality between the source signal at the input terminal 30 and the reconstructed signal at the input terminal 31 is therefore affected by the presence of those masking characteristics of high frequency and high amplitude in the source signal. The first signal processing channel, including the edge detection filter 31, the arithmetic unit 32 and the spreading filter 33, provides a masking signal representing the masking characteristics of the source signal at the input terminal 30.

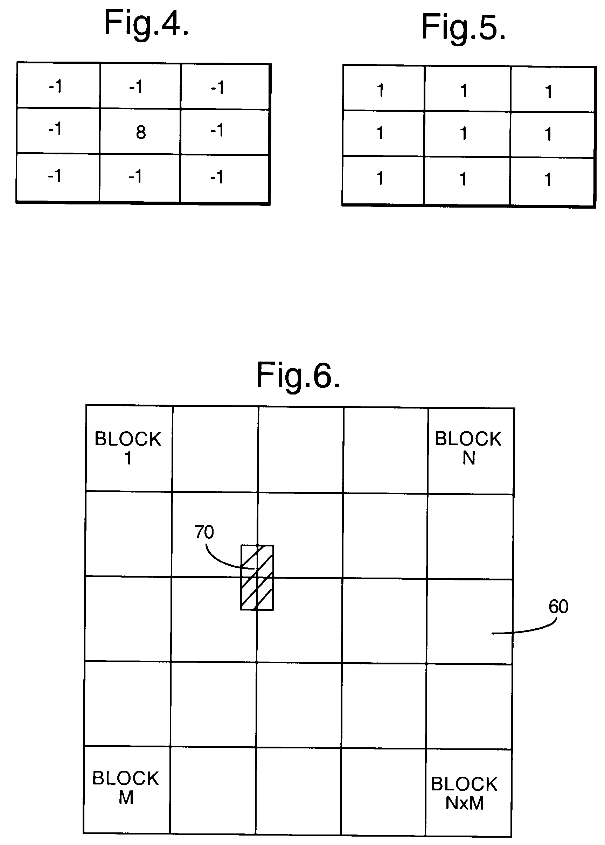

The edge detection filter 50 is a high pass filter, which has the coefficients shown in the table of Figure 4, and is designed as a two-dimensional edge detection filter. The output signal from the filter 50 is passed to the arithmetic unit 32, which derives the absolute magnitude of the signal. The signal derived by the arithmetic unit 32 is passed through the spatial low pass filter 33 to achieve a slight spreading into neighbouring pixels. The coefficients of the filter 33 are shown in the table of Figure 5. The masking signal output from the filter 33 is applied to both the compare unit 34 and to the amplifier 39.

The reconstructed signal at the input terminal 31 is subtracted from the source signal at the input terminal 30 by means of the summing unit 35. The resulting difference signal is passed to the arithmetic unit 36, which calculates the absolute magnitude of the difference signal. The amplifier 37 amplifies the magnitude of the difference signal by a constant (K) to equalise the gain between the second signal processing path and the masking signal path. If the signal from the amplifier 37 is greater than the masking signal, the distortion in the reconstructed signal is assumed to visible and an error signal is presented at the output from the compare unit 34. Otherwise, the error signal is switched off. The error signal from the compare unit 34 is attenuated in the variable attenuator 45 by a variable factor depending on the source signal luminosity. If the luminosity is near peak white or near black level, the contrast visibility and hence the visibility of distortion, is somewhat reduced because of the non-linearity of the display device used to display the picture information. This effect is used in the attenuator 45 by attenuating the error signal in the presence of peak white and near black luminosity of the source signal. For mid-range luminosity the error signal is supplied to the output terminal without attenuation. The error signal at the terminal 47 represents the "mosquito" noise introduced into the reconstructed signal.

The reconstructed signal and the source signal are applied to the blocking distortion circuit 38 to determine the amount of distortion across block boundaries suffered by the reconstructed signal relative to the source signal.

Referring to Figure 6, the blocks of a picture frame 60 are arranged in a matrix, which includes NxM blocks. Each block has both vertical and horizontal boundaries with the neighbouring blocks in the matrix. The blocks each consist of an array of pixels which includes pixels 70 at the boundaries of the blocks. The circuit 38 takes the source signal and makes a comparison between the intensity of pairs of pixels between neighbouring blocks across the vertical and horizontal boundaries. Each such comparison yields a factor $s_x - s_y$ where $s_x$ is the intensity of a pixel in a block of the source signal and $s_y$ is the intensity of the compared pixel in the neighbouring block. The circuit 38 also takes the reconstructed signal and makes a comparison between the intensity of the pairs of pixels between neighbouring blocks across the vertical and horizontal boundaries. The comparisons applied to the reconstructed signal each yield a factor $r_x - r_y$ where $r_x$ is the intensity of a pixel in a block of the reconstructed signal and $r_y$ is the intensity of the compared pixel in the neighbouring block. Each factor $r_x - r_y$ derived from the reconstructed signal is subtracted from the corresponding factor $s_x - s_y$ derived from the source signal so as to derive a quantity

$$B = \left| (s_x - s_y) - (r_x - r_y) \right| \qquad (1)$$

The quantity B is a measure of the distortion across block boundaries between the reconstructed and source signals. The blocking is measured in both the horizontal and vertical block edges.

The output from the circuit 38 is attenuated in the attenuator 39 under the control of the masking signal applied to the control input 41. If the masking signal is less than a pre-set threshold, the source signal at the terminal 30 is classified as plain and blocking distortion is fully visible. The attenuator 39 allows the blocking quantity B to pass without attenuation when the source signal is classified as plain. If the masking signal exceeds a second threshold the source signal is classified as an edge signal and blocking distortion is assumed to be fully masked. In this case the attenuator 39 switches off the blocking quantity B. If the masking signal is between the first and second thresholds, the source signal is classified as textured and the attenuator 39 attenuates the blocking quantity B by a variable amount dependant upon the level of the masking signal. The blocking quantity B is finally subjected to attenuation in the attenuator 40. The same luminosity-dependant signal is applied to the control input 42 as is applied to the control input 46 to control the attenuation in the attenuator 40.

The output from the apparatus shown in Figure 3 consists of the "mosquito" noise signal and the block noise signal. The "mosquito" noise signal is a continuously varying signal, which is present for all the pixels even though the magnitude of the signal may fall to zero at times. The block noise signal is bursty in nature and exists for pixels at horizontal and vertical block edges. The two output signals may be sampled and the samples added to give a measure of picture quality.

The picture quality may be expressed in dB as a weighted signal-to-noise ratio

$$SNR_w / dB = 20 \log \left\{ 255 / \sqrt{ \left[ (1/N \sum_N m_i)^2 + (C/N \sum_N b_i)^2 \right] } \right\} \qquad (2)$$

where $m_i$ are the "mosquito" noise samples; $b_i$ are the block noise samples; N is the number of samples; and C is a weighting factor to adjust for the relative visibility of the two types of distortion.

The added output signals, representing picture quality may be used to control the degree of compression in the compression encoder 11.

## Claims

1. A method of estimating the difference in picture quality between a first version of a video signal which has been subject to distortion and a second version of the video signal without the distortion, the method comprising the steps of:

   deriving a difference signal representing the difference between the distorted and undistorted versions of the video signal;

generating a masking signal by filtering the undistorted version of the video signal through a high-pass edge detection filter; and

masking the difference signal by means of the masking signal to derive an output measure of the said difference in picture quality.

2. A method as claimed in claim 1, wherein the step of generating the masking signal is performed by passing the undistorted version of the video signal through a processing channel which includes the said high-pass edge detection filter and an arithmetic circuit which determines the magnitude of the output from the edge detection filter.

3. A method as claimed in claim 2, wherein the step of generating the masking signal includes passing the said undistorted version of the video signal through a spatial low-pass filter included in the processing channel.

4. A method as claimed in claim 1, 2 or 3, comprising the further step of attenuating the said output measure of picture quality by a variable factor dependent on the luminosity of the undistorted version of the video signal.

5. A method as claimed in any one of the preceding claims, comprising the further steps of:

deriving a second measure of picture quality representing block distortion, across block boundaries, of the first version of the video signal relative to the second version;

masking the second measure of picture quality by means of the said masking signal; and

adding the two masked measures of picture quality.

6. A method as claimed in claim 5, wherein the step of masking the second measure of picture quality by means of the masking signal includes: passing the said second measure of picture quality through a variable attenuator which attenuates the second measure by an amount which is controlled by the masking signal.

7. A method as claimed in claim 6, including the step of further attenuating the said second measure of picture quality to an extent dependent on the luminosity of the undistorted version of the video signal.

8. A method as claimed in claim 5, 6 or 7 wherein the step of adding the two measures of picture quality is performed by adding samples of each measure to form a weighted output according to the relation:

$$SNR_w / dB = 20\log\{255 / \sqrt{[(1/N\sum_N m_i)^2 + (C/N\sum_N b_i)^2]}\}$$

where $m_i$ are the samples of the first said measure of picture quality; $b_i$ are the samples of the second said measure of picture quality; N is the number of samples; and C is a weighting factor.

9. Apparatus for estimating the difference in picture quality between a first version of a video signal which has been subject to distortion and a second version of the video signal without the distortion, the apparatus comprising:

a difference circuit to generate a difference signal representing the difference between the distorted and undistorted versions of the video signal;

a filter circuit comprising a high-pass edge detection filter to receive the undistorted version of the video signal and to generate a masking signal therefrom; and

a masking circuit to mask the difference signal by means of the masking signal to derive an output measure of the said difference in picture quality.

10. Apparatus as claimed in claim 9, wherein the filter circuit is included in a processing channel which also includes an arithmetic circuit to determine the magnitude of the output from the edge detection filter.

11. Apparatus as claimed in claim 10, wherein the said processing channel also includes a spatial low-pass filter.

12. Apparatus as claimed in claim 9, 10 or 11, wherein a variable attenuator is provided to attenuate the said output measure of picture quality by a variable factor dependent on the luminosity of the undistorted version of the video signal.

13. Apparatus as claimed in claim 9, 10, 11 or 12, comprising a block distortion circuit to derive a second measure of picture quality, the second measure representing block distortion, across block boundaries, of the first version of the video signal relative to the second version, the masking circuit being adapted to mask the second measure of picture quality by means of the said masking signal and an adding circuit being provided for adding the two masked measures of picture quality.

14. Apparatus as claimed in claim 13, wherein the masking circuit includes a variable attenuator adapted to attenuate the second measure of picture quality under the control of the masking signal.

15. Apparatus as claimed in claim 14, wherein the masking circuit includes a further attenuator adapted to attenuate the second measure of picture quality to an extent dependent on the luminosity of the undistorted version of the video signal.

16. Apparatus as claimed in claim 13, 14 or 15, wherein the adding circuit is adapted to add samples of each output measure to form a weighted output according to the relation:

$$SNR_w / dB = 20\log\{255 / \sqrt{[(1/N\sum_N m_i)^2 + (C/N\sum_N b_i)^2]}\}$$

where $m_i$ are the samples of the first said measure of picture quality; $b_i$ are the samples of the second said measure of picture quality; N is the number of samples; and C is a weighting factor.

17. A method of estimating the difference in picture quality between a first version of a video signal which has been subject to distortion and a second version of the video signal without the distortion, the method being substantially as hereinbefore described with reference to the accompanying drawings.

18. Apparatus for estimating the difference in picture quality between a first version of a video signal which has been subject to distortion and a second version of the video signal without the distortion, the apparatus being substantially as hereinbefore described with reference to the accompanying drawings.

# Fig.1.

Source signal
10

11

12

13

14

15
Delayed source signal

# Fig.2.

DELAY

15

10

11

DCT

Q

20

21

14

22

Q⁻¹

23

DCT⁻¹

13

12

VLC

24

25

MC

26

Fig.3.

# Fig.4.

| -1 | -1 | -1 |
|----|----|----|
| -1 | 8 | -1 |
| -1 | -1 | -1 |

# Fig.5.

| 1 | 1 | 1 |
|---|---|---|
| 1 | 1 | 1 |
| 1 | 1 | 1 |

# Fig.6.

| | | | | |
|---|---|---|---|---|
| BLOCK 1 | | | | BLOCK N |
| | | | | |
| | | | | |
| | | | | |
| BLOCK M | | | | BLOCK NxM |

70

60